# EUROPEAN PATENT SPECIFICATION

(11) **EP 0 778 178 B1**
(45) Date of publication and mention of the grant of the patent: **04.10.2001**
(21) Application number: 96308772.1
(22) Date of filing: 04.12.1996
(51) Int. Cl.: B60R 13/10, B44C 1/16

(54) **Production of vehicle registration number plates**
Herstellung von Kennzeichenschildern für Fahrzeuge
Production de plaques d'immatriculation pour véhicules

(30) Priority: 04.12.1995 GB 9524771
(43) Date of publication of application: 11.06.1997
(60) Divisional application: 01101860.3
(73) Proprietor: Statefresh Limited, London NW2 7JJ (GB)
(72) Inventor: Livingstone, Peter John, Slough, Berks SL1 4LP (GB)
(74) Representative: Everitt, Christopher James Wilders

(56) References cited:
- EP-A- 0 613 804
- EP-A- 0 636 519
- WO-A-94/23957
- CA-A- 2 076 582
- DE-A- 2 829 885
- FR-A- 2 637 227
- US-A- 5 399 217

## Description

This invention relates to production of vehicle registration number plates, the number plates being of the kind which comprises a laminate comprising a transparent plate to which is bonded face to face a film on which the number is depicted such that that number can be read through the transparent plate. Such vehicle registration number plates are referred to as "a vehicle registration number plate of the kind referred to" in the remainder of this description.

If the film on which the number is depicted is drawn from endless stock and the transparent plate is placed over the number depicted on the film and the two are bonded together, the resultant laminate then has to be severed from the endless stock. Even if the widths of the film and of the transparent plate are the same, it is necessary to trim the film at the end of the plate to remove unsightly projecting portions of the film. If this is done by hand it is time consuming and labour intensive.

An object of this invention is to provide a process and apparatus for forming vehicle registration number plates of the kind referred to above which does not require them to be trimmed by hand after they are severed from stock of the film on which the numbers are depicted.

According to one aspect of this invention there is provided a process for the production of vehicle registration number plates of the kind referred to, wherein a continuous strip of a laminate comprising a film having a surface on which a series of vehicle registration numbers are depicted, a layer of adhesive with which said surface is coated and a protective strip which adheres face to face with said adhesive such that it can be peeled off to expose the adhesive, is punched from the side of the film opposite the adhesive coated surface to weaken that film along lines on either side of a vehicle registration number depicted on that film, the lines of weakening being such that the profile of the area of the film they encompass corresponds to the profile of the transparent plate to which that portion of the film with the number depicted thereon is to be bonded face to face to form the number plate, the arrangement being such that, once the protective strip has been peeled off and the transparent plate has been presented to the exposed adhesive coated surface of said area in registry therewith and bonded thereto, the portion of the film that is bonded to the transparent plate can be torn from the remainder of the film along the lines of weakening so that there is no need for further trimming of the film at the periphery of the number plate.

Preferably the series of vehicle registration numbers are depicted on the film with the pitch between successive numbers being the length of a number plate plus an additional amount such that there will be a gap in the film between the weakening line at the rear of the area of film around a first number depicted on the film and the weakening line at the front of the area of film around the next number of the series of numbers depicted on the film whereby to cater for tolerances in the transparent plates and for stretching of the film.

Conveniently each line of weakening may comprise a line of perforations formed in the film. The ends of such a line which will be in registry with the corners of the number plate that is to be bonded to that area of the film may be formed by a continuous cut through the film. Preferably the perforations and/or continuous cuts are formed in the film without severing the contiguous protective layer which serves as a cutting matrix. Conveniently a reaction member of resilient material may be provided on the side of the laminate that comprises the protective strip to provide a resilient reaction to the punch action by which the perforations and/or continuous cuts are formed in the film.

According to another aspect of this invention there is provided a process for the production of vehicle registration number plates of the kind referred to, wherein a continuous strip comprising a film having a surface on which a series of vehicle registration numbers is depicted and which is coated with an exposed adhesive is passed between a pair of rollers with clearance between said adhesive coated surface and the facing roller, passage of the series of numbers through the rollers is monitored, the film is stopped each time a number of the series reaches a certain location relative to the rollers, a transparent plate is advanced towards the rollers whilst the film is stationary, the plate being advanced along a path which will lead to it being fed through the rollers in face to face contact with the adhesive coated surface of the strip of film when movement along that path is continued, the certain location and the dimensions of the plate being such that the plate is in registry with the respective number at that location when the plate reaches the rollers, arrival of the plate into registry with the respective number being arranged to initiate further movement of the film between the rollers so that the film and the plate are passed together through the rollers and bonded face to face thereby.

Preferably progress of the series of vehicle registration numbers between the rollers is monitored by optical sensing means which sense passage past them of a series of certain marks on the printed surface, those marks being in the same sequence as the series of numbers on the surface, the optical sensing means being interactively associated with driving means operable to drive the continuous strip between the rollers whereby to actuate stopping of the continuous strip when a respective mark is sensed.

The invention also provides apparatus for carrying out either said one aspect of the invention or the other aspect of the invention or both aspects of the invention.

According to a further aspect of this invention there is provided a continuous production line which comprises a printer which is operable to print a series of vehicle registration numbers on a film, adhesive transfer means which are operable to apply a layer of adhesive to the printed surface of the film with a protective strip which adheres face to face with said adhesive such that it can be peeled off to expose the adhesive, wherein the resultant laminate is punched from the side of the film opposite the adhesive coated surface to weaken that film along the lines on either side of a vehicle registration number depicted on that film by a process according to said one aspect of this invention, the transparent plate being presented to the exposed adhesive coated surface of said area in registry therewith and bonded thereto by a process according to said other aspect of the invention after the film was weakened along said lines on either side of the vehicle registration number and before the portion of the film with the transparent plate bonded to it is severed from the remainder of the film along the lines of weakening.

A process for the production of vehicle registration number plates in which this invention is embodied is described now by way of example with reference to the accompanying drawings, of which:-
Fig. 1 is a schematic diagram of apparatus for processing a continuous strip of film with a series of printed vehicle registration numbers thereon prior to bonding of that film to a transparent plate to form the number plate;
Fig. 2 is a plan view of a wood rule cutting die incorporated in the apparatus shown in Fig. 1;
Fig. 3 illustrates a length of plastic film with a series of exemplary vehicle registration numbers printed thereon, after it has been processed by the apparatus shown in Figs. 1 and 2; and
Fig. 4 is a schematic diagram of apparatus for bonding transparent plates to film processed by apparatus shown in Figs. 1 and 2 to form a vehicle registration number plate.

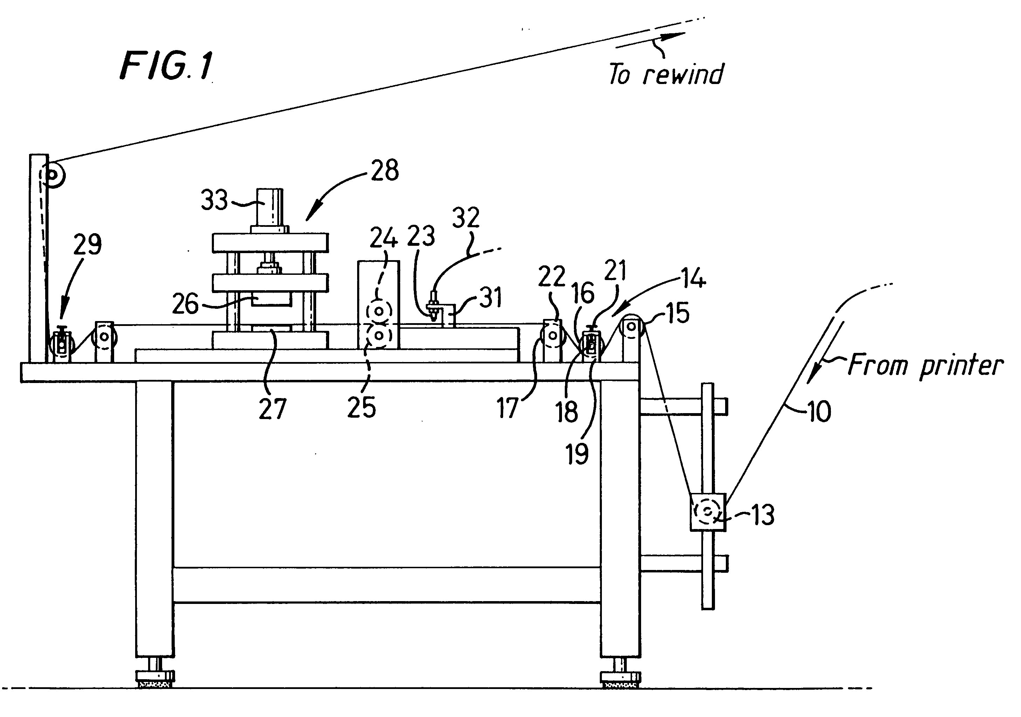

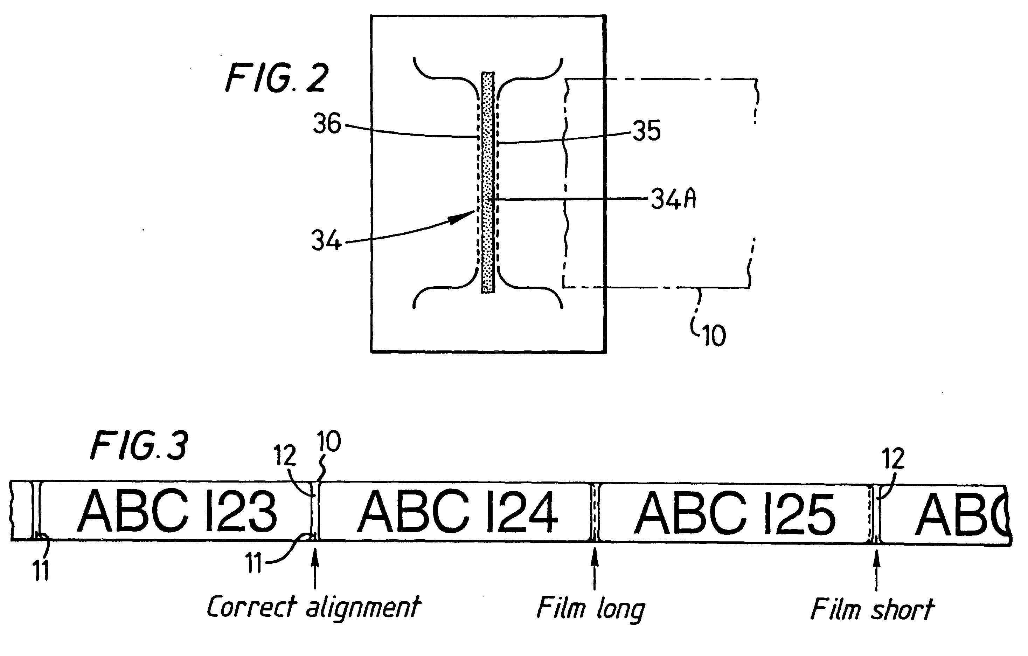

Figure 1 shows a continuous strip 10 of reflective plastic film which is drawn continuously from a printer (not shown). The printer is computer controlled and is operable to print on the reflective surface of the plastic film, a series of vehicle registration numbers of which an example is shown in Figure 3. The printer is also arranged to print a series of marks 11 at spaced intervals along one edge of the strip 10. The vehicle registration numbers are printed at a pitch which is the sum of the standard vehicle registration number plate length (eg. 520 mm) plus a certain spacing (say 5 mm) between successive number plate lengths. The marks 11 are printed at the same pitch but so that they are positioned substantially mid-way between successive registration numbers and in the certain spacing 12. The numbers that are printed are selected by operation of the computer control of the printer.

The reflective plastic film has a layer of adhesive applied to its printed surface after it emerges from the printer by operation of an adhesive transfer system (not shown). This adhesive transfer system involves separating carrier tape from a laminate in which the adhesive to be applied to the printed surface of the reflective plastic film is sandwiched between the carrier tape and a peel-off plastic film, and applying the adhesive layer, with the peel-off plastic film adhering to it, to the printed surface of the reflective film so that the adhesive is sandwiched between the printed reflective film and the peel-off film. The continuous strip 10 is the result.

Figure 1 shows the continuous strip 10 is fed around a counter balanced floating roller 13 at the input end of the apparatus shown. The counter balanced floating roller 13 provides compensation for different speeds of operation of the printer on one hand and the apparatus shown in Figure 1 on the other hand.

Having been passed round the counter balanced floating roller 13, the continuous strip 10 is fed through a film tracking assembly 14. The film tracking assembly 14 comprises an input roller 15, a vertically adjustable roller 16 and an adjustable tracking guide 17. The vertically adjustable roller is journalled on an axle 18 which is mounted in supports 19 at either end. The height of the axle 18 in either support 19 is adjustable by a respective screw 21.

The adjustable tracking guide 17 comprises a roller with an axially spaced pair of annular flanges, the spacing between the flanges being substantially equal to the width of the strip 10. The roller is journalled in a support 22 at either end and is provided with rotary means whereby the position of the roller, and thus of the annular flanges, between the two vertical supports 22 is adjustable laterally. The strip 10 is passed over the roller between the pair of lateral flanges.

Strip 10 emerging from the film tracking assembly 14 is fed under an optical sensor 23, between a pair of nip rolls 24 and 25 and between the platerns 26 and 27 of an electrically actuated pneumatic press 28 to another film tracking assembly 29 which is similar to the assembly 14.

The optical sensor 23 is supported by a support 31 above the edge of the strip 10 on which the marks 11 are printed so that those marks pass through its field of view. The output 32 of the sensor 23 is connected to an intelligent stepper motor controller (not shown). The stepper motor (not shown) controlled by that intelligent stepper motor controller is operable to drive a powered one of the pair of nip rolls 24 and 25. It is also operable to control the pneumatic cylinder 33 of the press 28.

A wood rule cutting die 34 (see Figure 2) is mounted on the lower platern 27 of the press 28. It comprises a spaced pair of cutters 35 and 36 which are a mirror image one of the other. Each cutter 35, 36 comprises a straight mid-portion which is in the form of a comb, the upper edges of the prongs of that mid-portion forming spaced cutting edges. At either end of each mid-portion of each cutter 35 and 36, there is an S-shaped continuous cutting edge, the two S-shaped continuous cutting edges at either end of the cutters 35 and 36 diverging as can be seen from Figure 2. The space between the two mid-portions of the cutters 35 and 36 is filled with rubber 34A to a level just above the cutting edges of the prongs. The upper and lower platerns 26 and 27 carry cooperating stops which limit the travel of the platerns towards one another. The upper platern carries a pad of elastomeric material on its top surface to buffer contact with other structure of the press above it. The arrangement is such that the wood rule cutting die 34 effects a kiss cut on the strip 10 between the two platerns 26 and 27 but does not fully perforate the peel-off plastic film which is a protective layer protecting the adhesive layer which is on the upper side of the strip 10. The peel-off plastic film serves as a cutting matrix. The rubber between the mid-portions of the two cutters 35 and 36 serves to ensure release of the strip 10 from the cutters when the press 28 is re-opened.

The intelligent stepper motor controller controls operation of the apparatus shown in Figure 1.

It controls the stepper motor which drives the nip rollers 24 and 25 to feed the strip 10 between the platerns 26 and 27 of the press 28 as follows. Initially the strip 10 is fed through at high speed, the sensor 23 being deactivated. This fast phase is continued until shortly before (say 10 mm) the next printed mark 11 enters the field of view of the sensor 23. In practice. the strip 10 is traversed passed the sensor 23 for about the length of a number plate, that is to say about 520 mm during this fast phase.

At the end of the fast phase, the intelligent controller instructs the stepper motor to drive the strip 10 at a slow speed or creep and also activates the sensor 23 during this creep phase. The sensor 23 emits a signal to the intelligent stepper motor controller in reaction to sensing the arrival of the mark 11 in its field of view. The intelligent stepper motor controller reacts to receipt of that signal from the sensor 23 to index the strip 10 a predetermined distance (about 20 mm) after detection of the mark 11 by the sensor 23 whereafter it stops the stepper motor so that the strip 10 is stopped between the platerns 26 and 27 of the press 28. The intelligent stepper motor controller then actuates the electrical power unit of the press 28 to actuate the press 28 and kiss cut the laminate as described.

The resultant cut in the printed film, but not in the peel off plastic film which protects the adhesive layer and serves as the cutting matrix, will comprise spaced lateral lines of perforations extending from side to side of the strip 10 with arcuate continuous cuts at either end, those arcuate cuts conforming to the corners of the proposed numbered plate.

On re-opening of the press 28, the strip 10 is released from the wood rule cutting die 34 by the action of the rubber between the two mid-portions of the cutters 35 and 36. Whereafter the cycle is repeated.

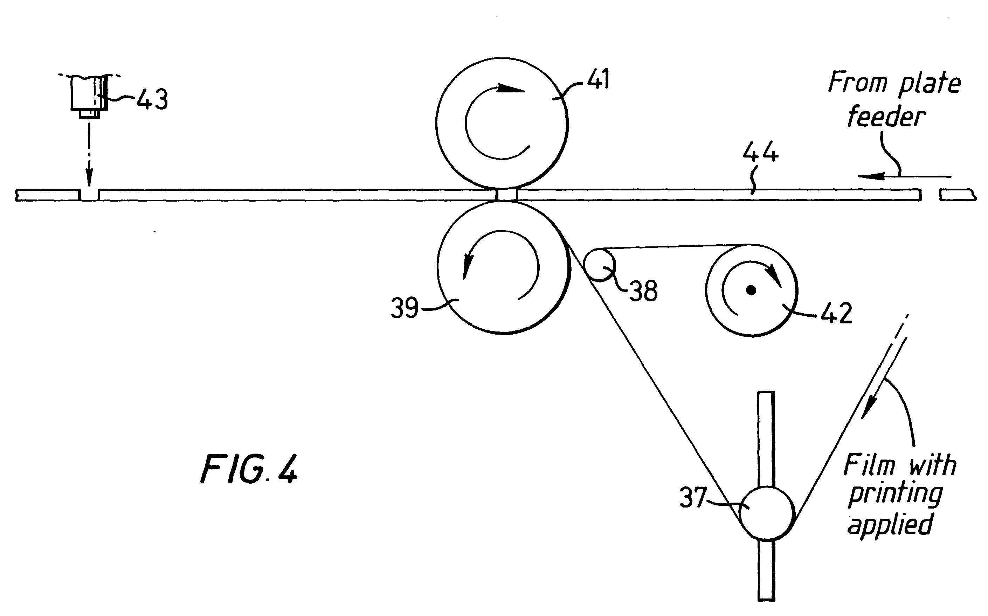

Figure 4 shows apparatus for bonding a transparent plastics plate 44 to the area of the strip 10 on which a vehicle registration number is printed and which is enclosed between successive kiss cuts formed on either side of that printed number by successive operations of the press 28. That area substantially corresponds to the area of the transparent plastics plate 44 which forms a structural element of the number plate and which is to be bonded to the adhesive coated printed surface so that the number can be viewed through the plastic plate 44.

Figure 1 shows the strip 10 that is drawn from the press being lead to a rewind roller which is not shown. In an alternative arrangement the strip 10 that is drawn from the downstream tracking unit 29 of the apparatus shown in Figure 1 could be fed directly to the apparatus shown in Figure 4.

Either way the film 10 that is introduced into the apparatus shown in Figure 4 is fed round a counter balanced floating roller 37 which is similar to the counter balanced floating roller 13 of the apparatus disclosed above and shown in Figure 1. This floating roller serves to allow for the different speeds at which the film 10 will be drawn through the press 28 on the one hand and through the apparatus shown in Figure 4 on the other hand when the apparatus shown in Figure 4 is part of a continuous process including the apparatus shown in Figure 1.

The strip 10 that emerges from the floating roller 37 is lead past a take off roller 38 and over the lower of a spaced pair of nip rollers 39 and 41. The peel-off plastic film is peeled off the adhesive coated printed surface of the strip 10 and led around the take off roller 38 to a rewind reel 42. Hence the continuous strip 10 that is fed between the spaced nip rollers 39 and 41 comprises the printed reflective plastic with its adhesive coating exposed and facing the upper roller 41.

The strip 10 that is led between the spaced rollers 39 and 41 is led past a second sensor 43 which is arranged to detect the passage of the marks 11 in a similar manner to that described above for the sensor 23 in the apparatus of Figure 1.

A stack of the transparent plates 44 that are to be bonded to the printed reflective plastic to form the number plate is provided. Means are provided are for feeding a plate 44 from the top of the stack into the space between the nip rollers 39 and 41.

The sensor 43 is located downstream of the rollers 41 and 42 such that, when a mark 11 is directly below it, a full length of one number plate is between it and the exit of the space between the two rollers 39 and 41, as shown in Figure 4, and such that the leading edge of the next portion of the strip 10, on which a vehicle registration number is printed and to which another plate 44 is to be bonded in registry with the respective printed number and the perforations at either end of that length of strip 10, is in the entrance of the space between the rollers 39 and 41.

In operation, the strip 10 is halted when the sensor 43 detects the presence of a mark 11 below it. The next plate from the stack is fed into the gap between the rollers 39 and 41 as shown in Figure 4. This ensures that the front edge of that plate 44 is correctly aligned with the perforations at the front of the area of the strip 10 on which the respective vehicle registration number is printed. Entry of this plate 44 into the nip of the rollers 39 and 41 initiates rotation of the driven one of those rollers 39 and 41 to index that plate 44 and the respective portion of the strip 10 together between those rollers 39 and 41 whereby the latter is bonded to the former by being passed between those rollers 39 and 41. The strip 10 is indexed forwards until the next mark is detected by the sensor 43 which detection initiates stopping the strip 10 at which point the laminate comprising the printed length of reflective plastic with a vehicle registration number printed thereon and the transparent plate 44 will be just emerging from the nip between the rollers 39 and 41. The process is then repeated.

The number plates can be separated from the strip 10 by being pulled by a faster nip roller assembly (not shown) so that the perforations at either end are separated or torn along the lines of weakening formed by those perforations and the arcuate cuts at either end.

## Claims

1. A process for the production of vehicle registration number plates of the kind referred to, wherein a continuous strip (10) of a laminate comprising a film having a surface on which a series of vehicle registration numbers are depicted, a layer of adhesive with which said surface is coated and a protective strip which adheres face to face with said adhesive such that it can be peeled off to expose the adhesive is used, **characterised in that** the laminate (10) is punched from the side of the film opposite the adhesive coated surface to weaken that film along lines on either side of a vehicle registration number depicted on that film, the lines of weakening being such that the profile of the area of the film they encompass corresponds to the profile of the transparent plate (44) to which that portion of the film with the number depicted thereon is to be bonded face to face to form the number plate, the arrangement being such that, once the protective strip has been peeled off and the transparent plate (44) has been presented to the exposed adhesive coated surface of said area in registry therewith and bonded thereto, the portion of the film that is bonded to the transparent plate (44) can be torn from the remainder of the film along the lines of weakening so that there is no need for further trimming of the film at the periphery of the number plate.

2. A process according to claim 1, wherein the series of vehicle registration numbers are depicted on the film with the pitch between successive numbers being the length of a number plate plus an additional amount such that there will be a gap (12) in the film between the weakening line at the rear of the area of film around a first number depicted on the film and the weakening line at the front of the area of film around the next number of the series of numbers depicted on the film whereby to cater for tolerances in the transparent plates and for stretching of the film.

3. A process according to claim 1 or claim 2, wherein each line of weakening comprises a line of perforations formed in the film and the ends of each line of weakening which will be in registry with the corners of the number plate that is to be bonded to that area of the film, are formed by a continuous cut through the film.

4. A process according to claim 3, wherein the perforations and continuous cuts are formed in the film without severing the contiguous protective layer which serves as a cutting matrix.

5. A process according to claim 3 or 4, wherein a reaction member of resilient material (34A) is provided on the side of the laminate (10) that comprises the protective strip to provide a resilient reaction to the punch action by which the perforations and continuous cuts are formed in the film.

6. A process for the production of vehicle registration number plates of the kind referred to, wherein a continuous strip (10) comprising a film having a surface on which a series of vehicle registration numbers is depicted and which is coated with an exposed adhesive has a respective transparent plate placed over each of the numbers and bonded thereto face to face, **characterised in that** the continuous strip is passed between a pair of rollers (39 and 41) with clearance between said adhesive coated surface and the facing roller (41), passage of the series of numbers through the rollers (39 and 41) is monitored, the film is stopped each time a number of the series reaches a certain location relative to the rollers (39 and 41), the respective transparent plate (44) is advanced towards the rollers (39 and 41) whilst the film is stationary, the plate (44) being advanced along a path which will lead to it being fed through the rollers (39 and 41) in face to face contact with the adhesive coated surface of the strip of film when movement along that path is continued, the certain location and the dimensions of the plate (44) being such that the plate (44) is in registry with the respective number at that location when the plate (44) reaches the rollers (39 and 41), arrival of the plate (44) into registry with the respective number being arranged to initiate further movement of the film between the rollers (39 and 41) so that the film and the plate (44) are passed together through the rollers (39 and 41) and bonded face to face thereby.

7. A process according to claim 6, wherein progress of the series of vehicle registration numbers between the rollers (39 and 41) is monitored by optical sensing means (43) which sense passage past them of a series of certain marks (11) on the printed surface, those marks (11) being in the same sequence as the series of numbers on the surface, the optical sensing means (43) being interactively associated with driving means operable to drive the continuous strip between the rollers (39 and 41) whereby to actuate stopping of the continuous strip when a respective mark (11) is sensed.

8. Apparatus for carrying out a process for the production of vehicle registration number plates of the kind referred to according to any one of claims 1 to 7, **characterised in that** punching means (28 and 34) are provided whereby a continuous strip of a laminate (10) comprising a film having a surface on which a series of vehicle registration numbers are depicted, a layer of adhesive with which said surface is coated and a protective strip which adheres face to face with said adhesive such that it can be peeled off to expose the adhesive, is punched from the side of the film opposite the adhesive coated surface to weaken that film along lines on either side of a vehicle registration number depicted on that film, the lines of weakening being such that the profile of the area of the film they encompass corresponds to the profile of the transparent plate (44) to which that portion of the film with the number depicted thereon is to be bonded face to face to form the number plate, the arrangement being such that, once the protective strip has been peeled off and the transparent plate (44) has been presented to the exposed adhesive coated surface of said area in registry therewith and bonded thereto, the portion of the film that is bonded to the transparent plate (44) can be torn from the remainder of the film along the lines of weakening so that there is no need for further trimming of the film at the periphery of the number plate.

9. Apparatus for carrying out a process for the production of vehicle registration number plates of the kind referred to according to any one of claims 1 to 7, or according to claim 8, **characterised in that** there is provided a pair of rollers (39 and 41), means for passing a continuous strip (10) comprising a film having a surface on which a series of vehicle registration numbers is depicted and which is coated with an exposed adhesive between the pair of rollers (39 and 41) with clearance between said adhesive coated surface and the facing roller, means (11 and 43) for monitoring passage of the series of numbers through the rollers (39 and 41), means for stopping the film each time a number of the series reaches a certain location relative to the rollers (39 and 41), means operable whilst the film is stationary to advance a transparent plate (44) towards the rollers (39 and 41) along a path which will lead to it being fed through the rollers (39 and 41) in face to face contact with the adhesive coated surface of the strip of film when movement along that path is continued, the certain location and the dimensions of the plate (44) being such that the plate (44) is in registry with the respective number at that location when the plate (44) reaches the rollers (39 and 44), means responsive to arrival of the plate into registry with the respective number and operable in response to such arrival to initiate further movement of the film between the rollers (39 and 41) so that the film and the plate (44) are passed together through the rollers (39 and 41) and bonded face to face thereby.

10. A continuous production line which comprises a printer which is operable to print a series of vehicle registration numbers on a film, adhesive transfer means which are operable to apply a layer of adhesive to the printed surface of the film with a protective strip which adheres face to face with said adhesive such that it can be peeled off to expose the adhesive, **characterised in that** the resultant laminate (10) is punched from the side of the film opposite the adhesive coated surface to weaken that film along the lines on either side of a vehicle registration number depicted on that film by a process according to any one of claims 1 to 6, the transparent plate (44) being presented to the exposed adhesive coated surface of said area in registry therewith and bonded thereto by a process according to either of claims 7 and 8 after the film was weakened along said lines on either side of the vehicle registration number and before the portion of the film with the transparent plate (44) bonded to it is severed from the remainder of the film along the lines of weakening.

## Patentansprüche

1. Verfahren für die Herstellung von Fahrzeugkennzeichenschildern der beschreibungsgemäß vorausgesetzten Art, wobei ein fortlaufender Streifen (10) ein Schichtwerkstoff ("Laminat") ist mit einer Folie mit einer Fläche, auf der eine Folge von Fahrzeugkennzeichen sich befindet, mit einer Klebstoffschicht, die die vorgenannte Fläche überdeckt und mit einem Schutzstreifen, der der Klebstoffschicht derart flächig zugeordnet ist, dass er abgezogen werden kann, um die Klebstoffschicht zur Verwendung freizugeben, **dadurch gekennzeichnet, dass** das Laminat (10) von der Seite aus eingestanzt wird, die der mit Klebstoff beschichteten Fläche abgekehrt ist, um die Folie entlang Linien auf beiden Seiten eines auf der Folie befindlichen Fahrzeugkennzeichens zu schwächen, wobei die Schwächung der Folie derart ist, **dass** die Länge eines Folienabschnitts zwischen den Schwächungslinien der Länge einer transparenten Platte (44) entspricht, um zur Bildung des Kennzeichenschildes den Folienabschnitt und die transparente Platte flächig miteinander zu verkleben, wobei die Anordnung so getroffen ist, **dass**, wenn der Schutzstreifen abgezogen worden ist und die transparente Platte (44) der freigelegten, mit Klebstoff versehenen Fläche des Folienabschnitts in Übereinstimmung mit diesem der Fläche zugefügt und mit ihr verklebt worden ist, der Abschnitt der Folie, der mit der transparenten Platte (44) verklebt ist, entlang den Schwächungslinien von der restlichen Folie getrennt wird, ohne **dass** es dabei notwendig würde, die Folie am Rand des Kennzeichenschildes zurechtzuschneiden.

2. Verfahren nach Anspruch 1, bei dem die Folge von Fahrzeugkennzeichen auf der Folie mit einem Zwischenraum zwischen aufeinanderfolgenden Kennzeichen mit einer Länge angebracht sind, die der Länge eines Kennzeichenschildes zuzüglich einer zusätzlichen Länge entspricht, sodass ein Abstand (12) auf der Folie zwischen der Schwächungslinie am hinteren Ende des Bereiches der Folie um ein erstes auf der Folie angebrachtes Kennzeichen und der Schwächungslinie am vorderen Ende des Bereichs der Folie um ein nächstfolgendes Kennzeichen der Serie von auf der Folie angebrachten Kennzeichen besteht, um Toleranzen in den transparenten Platten durch Strecken der Folie berücksichtigen zu können.

3. Verfahren nach Anspruch 1 oder Ansruch 2, bei dem jede Schwächungslinie eine in der Folie ausgebildete Perforation aufweist und die Enden jeder Schwächungslinie, die mit Ekken des Kennzeichenschildes zusammentreffen, das mit dem jeweiligen Folienabschnitt zu verkleben ist, durch die Folie durchtrennende, die Perforation fortsetzende Schnitte gebildet werden.

4. Verfahren nach Anspruch 3, bei dem die Perforationen und die diese fortsetzenden Schnitte in der Folie ausgebildet sind, ohne in die an dieser anliegende Schutzschicht einzudringen, die als Schneidunterlage dient.

5. Verfahren nach Anspruch 3 oder 4, bei dem ein Reaktionsglied (34A) aus elastisch nachgiebigem Material auf der Seite des Laminates (10) vorgesehen ist, der der Schutzstreifen zugeordnet ist, um dem Stanzen der Perforation und der Herstellung der Schnitte einen elastisch nachgiebigen Widerstand entgegenzusetzen.

6. Verfahren für die Herstellung von Fahrzeugkennzeichenschildern der beschreibungsgemäß vorausgesetzten Art, wobei ein fortlaufender Streifen (10) eine Folie mit einer Fläche aufweist, auf der eine Folge von Fahrzeugkennzeichen ausgebildet ist und die mit einer frei zugänglichen Klebstoffschicht bedeckt ist, wobei über jedem der Kennzeichen sich eine transparente Platte befindet, die Fläche an Fläche anliegend mit dem Folienbereich im Bereich des Fahrzeugkennzeichens verklebt ist, **dadurch gekennzeichnet, dass** der fortlaufende Streifen zwischen den Rollen (39 und 41) eines Rollenpaares mit einem freien Spiel zwischen der mit Klebstoff bedeckten Fläche des Streifens und der dieser Fläche zugeordneten Rolle (41) hindurchgeführt wird, wobei die damit verbundene Hindurchführung der Folge von Fahrzeugkennzeichen durch die Rollen (39 und 41) überwacht wird, die Folie jedesmal dann angehalten wird, wenn eines der Fahrzeugkennzeichen sich in einer bestimmten Zuordnung zu den Rollen (39 und 41) befindet, die jeweilige transparente Platte (44) gegen die Rollen (39 und 41) auf einem Vorschubweg derart vorgeschoben wird, **dass** die Platte und die mit Klebstoff beschichtete Folienfläche flächig einander zugewandt, bei weiterer Bewegung der Platte entlang dem Vorschubweg durch die Rollen hindurch vorgeschoben werden, wobei Zuordnung der Platte (44) und deren Abmessung derart sind, **dass** die Platte (44) und deren Abmessung derart sind, **dass** die Platte (44) sich in Übereinstimmung mit jeweils einem der Kennzeichen befindet, wenn die Rollen (39 und 41) erreicht sind, wobei nach Erreichen der Übereinstimmung von Platte und Kennzeichen beim Ankommen der Platte (44) im Bereich der Rollen (39 und 41) die weitere gemeinsame Bewegung von Platte und Folie zwischen den Rollen (39 und 41) hindurch derart erfolgt, **dass** Folie und Platte (44) einander zugewandt flächig aneinandergelegt und miteinander verklebt werden.

7. Verfahren nach Anspruch 6, bei dem der Vorschub der Folge von Fahrzeugkennzeichen zwischen den Rollen (39 und 41) von optischen Fühlmitteln (43) überwacht wird, die den Durchgang nach den Rollen unter Mitwirkung einer Folge bestimmter Markierungen (11) auf der bedruckten Oberfläche ermitteln, wobei diese Markierungen (11) in der gleichen Sequenz wie die Folge der Kennzeichen auf der Oberfläche angeordnet sind und die optischen Fühlmittel (43) mit den Antriebsmitteln zusammenwirkend angeordnet sind, die den fortlaufenden Streifen zwischen den Rollen (39 und 41) hindurch vorschieben, wobei das Anhalten des fortlaufenden Streifens beim Ermitteln des jeweiligen Kennzeichens veranlaßt wird.

8. Vorrichtung zur Durchführung eines Verfahrens zur Herstellung von Fahrzeugkennzeichenschildern der beschreibungsgemäß vorausgesetzten Art gemäß einem der Ansprüche 1 bis 7, **dadurch gekennzeichnet, dass** Stanzmittel (28 und 34) sowie ein fortlaufender Streifen eines Laminats (10) vorgesehen sind, wobei das Laminat eine Folie mit einer Fläche einschließt, auf der eine Folge von Fahrzeugkennzeichen abgebildet ist, wobei das Laminat ferner eine Klebstoffschicht einschließt, mit der die genannte Fläche beschichtet ist und wobei das Laminat einen Schutzstreifen einschließt, der Fläche an Fläche anliegend dem Klebstoff derart zugeordnet ist, **dass** er abgezogen werden kann, um den Klebstoff freizulegen, wobei der fortlaufende Laminatstreifen von der Seite der Folie, die der mit Klebstoff beschichteten Seite abgekehrt ist, eingestanzt ist, um die Folie entlang Linien zu schwächen, die auf je einer Seite des Fahrzeugkennzeichens auf der Folie angeordnet sind derart, **dass** die Länge des Folienabschnittes, die durch Linien bestimmt ist, der Länge der transparenten Platte (44) entspricht, der der Folienabschnitt mit dem darauf angebrachten Fahrzeugkennzeichen zugeordnet ist, um mit ihr flächig verklebt zu werden, um das Kennzeichenschild zu bilden, wobei die Anordnung so ist, **dass**, nachdem der Schutzstreifen abgezogen worden ist und die transparente Platte (44) der freigelegten, mit Klebstoff beschichteten Fläche im genannten Bereich passend zugeordnet und mit ihr verklebt worden ist, der Abschnitt der Folie, der mit der transparenten Platte (44) verklebt ist, entlang Schwächungslinien vom Rest der Folie abgerissen werden kann, ohne die Notwendigkeit des abschließenden Zurechtschneidens der Folie am Ende des Kennzeichenschildes.

9. Vorrichtung zur Durchfü+hrung eines Verfahrens zur Herstellung von Fahrzeugkennzeichenschildern der vorausgesetzten Art gemäß einem der Ansprüche 1 bis 7 oder gemäß Anspruch 8, **dadurch gekennzeichnet, dass** ein Paar Rollen (39 und 41) vorgesehen ist, **dass** Mittel zur Hindurchführung eines fortlaufenden Streifens (10) zwischen den Rollen des Rollenpaares (39 und 41) vorgesehen sind, wobei der Streifen eine Folie einschließt, auf deren einen Seite eine Folge von Fahrzeugkennzeichen vorgesehen ist und die mit einem freiliegenden Klebstoff beschichtet ist, wobei zwischen der mit Klebstoff beschichteten Seite der Folie und der dieser Seite zugeordneten Rolle ein freier Spalt eingehalten ist, wobei Mittel vorgesehen sind, um den Durchgang der Folge von Kennzeichen zwischen den Rollen (39 und 41) zu überwachen, wobei Mittel vorgesehen sind, um die Folie jedesmal dann anzuhalten, wenn ein Kennzeichen der Kennzeichenfolge eine bestimmte Stellung relativ zu den Rollen (39 und 41) erreicht hat, wobei Mittel vorgesehen sind, die zu betätigen sind, wenn der Vorschub der Folie unterbrochen ist, um den Vorschub einer transparenten Platte (44) in Richtung auf die Rollen (39 und 41) zu veranlassen entlang eines Vorschubweges, der zu den Rollen (39 und 41) hin und zwischen diesen hindurchführt, um die transparente Platte im flächigen Kontakt mit der mit Klebstoff beschichteten Fläche der Streifenfolie zu bringen, wenn die Bewegung entlang des Vorschubweges fortgesetzt wird, wobei bestimmte Stellung und Abmessung der Platte (44) derart sind, **dass** die Platte (44) mit dem jeweiligen Kennzeichen übereinstimmt, wenn die Platte (44) die Rollen (39 und 41) erreicht, wobei Mittel vorgesehen sind, die bei Erreichen der Übereinstimmung von Platte und jeweiligem Kennzeichen ansprechen und davon abhängig zu betätigen sind, um die weitere Vorschubbewegung auch der Folie zwischen den Rollen (39 und 41) zu veranlassen, sodass Folie und Platte (44) gemeinsam zwischen den Rollen (39 und 41) zwischen diesen hindurch vorgeschoben werden und dabei flächig miteinander verklebt werden.

10. Stetig arbeitende Produktionskette mit einem Drucker, der zum Drucken einer Folge von Fahrzeugkennzeichen auf eine Folie zu veranlassen ist, mit Klebstoffauftragmitteln, die zum Auftragen einer Klebstoffschicht auf die bedruckte Flächeder Folie zu veranlassen sind, wobei das Auftragen der Klebstoffschicht mit der Zuordnung eines Schutzstreifens Fläche auf Fläche zur Klebstoffschicht derart erfolgt, dass der Schutzstreifen abgezogen werden kann, um die Klebstoffschicht freizulegen, **dadurch gekennzeichnet, dass** das sich ergebende Laminat (10) von der Seite der Folie aus, die der mit Klebstoff beschichteten Fläche abgekehrt ist, gestanzt wird, um die Folie entlang Linien zu schwächen, die beiderseits eines Fahrzeugkennzeichens verlaufen, das gemäß einem beliebigen der Ansprüche 1 bis 6 auf der Folie aufgetragen worden ist, wobei die transparente Platte (44) der mit frei zugänglich gemachten Klebstoff beschichteten Fläche des Streifens zugeordnet wird, wenn dieser Streifenbereich zur Übereinstimmung mit der transparenten Platte gekommen ist, um Streifenbereich und transparente Platte durch ein Verfahren nach einem beliebigen der Ansprüche 7 und 8 miteinander zu verkleben, nachdem eine Schwächung der Folie entlang Linien zu beiden Seiten des Fahrzeugkennzeichens erfolgt ist und ehe der Folienabschnitt, der mit der transparenten Platte (44) verklebt ist, vom Rest der Folie entlang den Schwächungslinien abgetrennt wird.

## Revendications

1. Un procédé pour la production de plaques d'immatriculation pour véhicules du type concerné, dans lequel on utilise une bande continue (10) d'un stratifié comprenant un film présentant une surface sur laquelle est représentée une série de numéros d'immatriculation pour véhicules, une couche de matière adhésive dont est revêtue ladite surface et une bande protectrice qui adhère face à face à ladite matière adhésive de telle manière qu'elle puisse être retirée par pelage pour mettre à nu la matière adhésive, **caractérisé en ce que** le stratifié (10) est découpé du côté du film opposé à la surface revêtue de matière adhésive pour affaiblir ce film le long de lignes de chaque côté d'un numéro d'immatriculation pour véhicule représenté sur ce film, les lignes d'affaiblissement étant telles que le profil de la zone du film qu'elles enveloppent correspond au profil de la plaque transparente (44) à laquelle cette partie du film avec le numéro représenté dessus doit être assemblée face à face pour former la plaque d'immatriculation, la disposition étant telle que, une fois que la bande protectrice a été retirée par pelage et que la plaque transparente (44) a été présentée à la surface revêtue de matière adhésive mise à nu de ladite zone en repérage avec elle et assemblée à celle-ci, la partie du film qui est assemblée à la plaque transparente (44) peut être déchirée du reste du film le long des lignes d'affaiblissement de sorte qu'il n'est pas nécessaire d'effectuer un détourage supplémentaire du film à la périphérie de la plaque d'immatriculation.

2. Un procédé selon la revendication 1, dans lequel la série de numéros d'immatriculation pour véhicules est représentée sur le film avec le pas entre numéros successifs qui est égal à la longueur d'une plaque d'immatriculation ajoutée à une quantité additionnelle telle qu'il existe un intervalle (12) dans le film entre la ligne d'affaiblissement à l'arrière de la zone de film autour d'un premier numéro représenté sur le film et la ligne d'affaiblissement à l'avant de la zone de film autour du numéro suivant de la série de numéros représentés sur le film de manière à pourvoir aux tolérances des plaques transparentes et à l'étirage du film.

3. Un procédé selon revendication 1 ou la revendication 2, dans lequel chaque ligne d'affaiblissement comprend une ligne de perforations formée dans le film et dans lequel les extrémités de chaque ligne d'affaiblissement qui seront en repérage avec les coins de la plaque d'immatriculation qui doit être assemblée à cette zone du film, sont formées par une découpe continue à travers le film.

4. Un procédé selon la revendication 3, dans lequel les perforations et les découpes continues sont formées dans le film sans retirer la couche protectrice contigue qui sert de matrice de découpe.

5. Un procédé selon la revendication 3 ou 4, dans lequel un élément de réaction en matière élastique (34A) est prévu sur le côté de stratifié (10) qui comprend la bande protectrice pour assurer une réaction élastique à l'action de découpe par laquelle les perforations et découpes continues sont formées dans le film.

6. Un procédé pour la production de plaques d'immatriculation pour.. véhicules du type concerné, dans lequel une bande continue (10), comprenant un film présentant une surface sur laquelle est représentée une série de numéros d'immatriculation pour véhicules et qui est revêtue d'une matière adhésive mise à nu, présente une plaque transparente respective placée sur chacun des numéros et assemblée face à face à ceux-ci, **caractérisé en ce que** la bande continue est amenée à passer entre une paire de rouleaux (39 et 41) avec jeu entre ladite surface revêtue de matière adhésive et le rouleau de contact (41), le passage de la série de numéros à travers les rouleaux (39 et 41) est contrôlé, le film est arrêté à chaque fois qu'un numéro de la série atteint un certain emplacement par rapport aux rouleaux (39 et 41), la plaque transparente respective (44) est amenée à avancer vers les rouleaux (39 et 41) alors que le film est stationnaire, la plaque (44) étant amenée à avancer le long d'un trajet qui conduira à ce qu'elle soit amenée à travers les rouleaux (39 et 41) en contact face à face avec la surface revêtue de matière adhésive de la bande de film lorsqu'un déplacement le long de ce trajet se poursuit, ce certain emplacement et les dimensions de la plaque (44) étant tels que la plaque (44) soit en repérage avec le numéro respectif à cet emplacement lorsque la plaque (44) atteint les rouleaux (39 et 44), l'arrivée de la plaque (44) en repérage avec le numéro respectif étant disposée pour amorcer un déplacement supplémentaire du film entre les rouleaux (39 et 41) de sorte que le film et la plaque (44) sont amenés à passer ensemble à travers les rouleaux (39 et 41) et assemblés face à face par ceux-ci.

7. Un procédé selon la revendication 6, dans lequel la progression de la série de numéros d'immatriculation pour véhicules entre les rouleaux (39 et 41) est contrôlée par des moyens de détection optiques (44) qui détectent le passage devant eux d'une série de certaines marques (11) sur la surface imprimée, ces marques (11) étant dans la même séquence que la série de numéros sur la surface, les moyens de détection optiques (43) étant associés de manière interactive à des moyens d'entraînement actionnables pour entraîner la bande continue entre les rouleaux (39 et 41) de manière à actionner l'arrêt de la bande continue lorsqu'est détectée une marque respective (11).

8. Appareil pour mettre en oeuvre un procédé pour la production de plaques d'immatriculation pour véhicules du type concerné selon une quelconque des revendications 1 à 7, **caractérisé en ce qu'**on prévoit des moyens de découpage (28 et 34) par lesquels une bande continue d'un stratifié (10), comprenant un film présentant une surface sur laquelle est représentée une série de numéros d'immatriculation pour véhicules, une couche de matière adhésive dont est revêtue ladite surface et une bande protectrice qui adhère face à face à ladite matière adhésive de telle manière qu'elle puisse être retirée par pelage pour mettre à nu la matière adhésive, est découpée du côté du film opposé à la surface revêtue de matière adhésive pour affaiblir ce film le long de lignes sur chaque côté d'un numéro d'immatriculation pour véhicule représenté sur ce film, les lignes d'affaiblissement étant telles que le profil de la zone du film qu'elles enveloppent correspond au profil de la plaque transparente (44) à laquelle cette partie du film avec le numéro représenté dessus doit être assemblée face à face pour former la plaque d'immatriculation, la disposition étant telle que, une fois que la bande protectrice a été retirée par pelage et que la plaque transparente (44) a été présentée à la surface revêtue de la matière adhésive mise à nu de ladite zone en repérage avec elle et assemblée à celle-ci, la partie du film qui est assemblée à la plaque transparente (44) peut être déchirée du reste du film le long des lignes d'affaiblissement de sorte qu'il n'est pas nécessaire d'effectuer un détourage supplémentaire du film à la périphérie de la plaque d'immatriculation.

9. Appareil pour mettre en oeuvre un procédé pour la production de plaques d'immatriculation pour véhicules du type en concerné selon une quelconque des revendications 1 à 7, où selon la revendication 8, **caractérisé en ce qu'**on prévoit une paire de rouleaux (39 et 41), des moyens pour faire passer une bande continue (10) comprenant un film présentant une surface sur laquelle est représentée une série de numéros d'immatriculation pour véhicules et qui est revêtue d'une matière adhésive mise à nue entre la paire de rouleaux (39 et 41) avec jeu entre ladite surface revêtue de matière adhésive et le rouleau de contact, des moyens (11 et 43) pour contrôler le passage de la série de numéros à travers les rouleaux (39 et 41), des moyens pour arrêter le film à chaque fois qu'un numéro de la série atteint un certain emplacement par rapport aux rouleaux (39 et 41), des moyens actionnables alors que le film est stationnaire pour faire avancer une plaque transparente (44) vers les rouleaux (39 et 41) le long d'un trajet qui conduira à ce qu'elle soit amenée à travers les rouleaux (39 et 41) en contact face à face avec la surface revêtue de matière adhésive de la bande de film lorsqu'un déplacement le long de ce trajet se poursuit, ce certain emplacement et les dimensions de la plaque (44) étant tels que la plaque (44) est en repérage avec le numéro respectif à cet emplacement lorsque la plaque (44) atteint les rouleaux (39 et 44), des moyens répondant à l'arrivée de la plaque en repérage avec le numéro respectif et actionnables en réponse à cette arrivée pour amorcer un déplacement ultérieur du film entre les rouleaux (39 et 41) de sorte que le film et la plaque (44) sont amenés à passer ensemble à travers les rouleaux (39 et 41) et assemblés face à face par ceux-ci.

10. Une ligne de production continue qui comprend une imprimante qui est actionnable pour imprimer, sur un film, une série de numéros d'immatriculation pour véhicules, des moyens de transfert de matière adhésive qui sont actionnables pour appliquer une couche de matière adhésive sur la surface imprimée du film avec une bande protectrice qui adhère face à face à ladite matière adhésive de telle manière qu'elle puisse être retirée par pelage pour mettre à nu la matière adhésive, **caractérisée en ce que** le stratifié résultant (10) est découpé du côté du film opposé à la surface revêtue de matière adhésive pour affaiblir ce film le long des lignes sur chaque côté d'un numéro d'immatriculation pour véhicule représenté sur ce film par un procédé selon une quelconque des revendications 1 à 6, la plaque transparente (44) étant présentée à la surface revêtue de matière adhésive mise à nu de ladite zone en repérage avec elle et reliée à celle-ci par un procédé selon l'une quelconque des revendications 7 et 8 après que le film a été affaibli le long desdites lignes sur chaque côté du numéro d'immatriculation pour véhicule et avant que la partie du film avec la plaque transparente (4) assemblée à celle-ci soit retirée du reste du film le long des lignes d'affaiblissement.
